# EUROPEAN PATENT APPLICATION

(11) **EP 2 073 559 A1**
(43) Date of publication of application: **24.06.2009**
(21) Application number: 08251585.9
(22) Date of filing: 30.04.2008
(51) Int. Cl.: H04N 7/58, H04N 7/18

(54) **Multiplexing video using a DSP**

(30) Priority: 19.12.2007 US 959650
(71) Applicant: Verint Systems Inc., Santa Clara, CA 95054 (US)
(72) Inventor: Racicot, Marc, Laval, Québec H7Y 2A3 (CA)
(74) Representative: Bibby, William Mark

(57) **Abstract**

A method of operating a video processing system is disclosed. A plurality of video streams that were produced by a plurality of video Analog to Digital Converters (ADCs) are received into a Digital Signal Processor (DSP). The plurality of video streams are multiplexed in the DSP into an unencoded multiplexed video stream. The unencoded multiplexed video stream is transferred from the DSP to a video encoder.

## Description

### TECHNICAL FIELD

The invention is related to the field of video processing.

### TECHNICAL BACKGROUND

Video processing consumes large amounts of compute resources. Because each image, or frame, of a video is a large multi-dimensional array, and a new image or field may arrive every 1/60^{th} of a second (or faster), large volumes of data are involved in video processing. An even larger volume of data is processed when a video processing system manipulates multiple video streams simultaneously. Because of the large volumes of data, custom and semi-custom integrated circuits are often used to process video.

### SUMMARY

A method of operating a video processing system is disclosed. A plurality of video streams that were produced by a plurality of video Analog to Digital Converters (ADCs) are received into a Digital Signal Processor (DSP). The plurality of video streams are multiplexed in the DSP into an unencoded multiplexed video stream. The unencoded multiplexed video stream is transferred from the DSP to a video encoder.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, there is no intent to limit the disclosure to the embodiment or embodiments disclosed herein. On the contrary, the intent is to cover all alternatives, modifications, and equivalents.

Figure 1 is a block diagram illustrating a video multiplexing system.

Figure 2 is a flowchart illustrating a method of multiplexing videos.

Figure 3 is a flowchart illustrating a method of receiving, transferring, and multiplexing videos.

Figure 4 is a block diagram illustrating a computer system.

### DETAILED DESCRIPTION

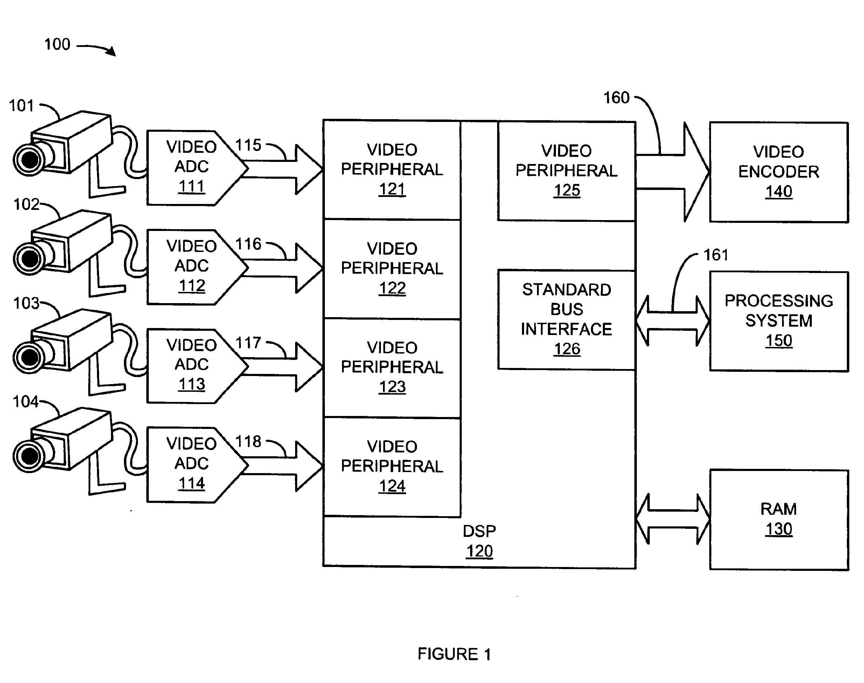

Figures 1-4 and the following description depict specific embodiments of the invention to teach those skilled in the art how to make and use the best mode of the invention. For the purpose of teaching inventive principles, some conventional aspects have been simplified or omitted. Those skilled in the art will appreciate variations from these embodiments that fall within the scope of the invention. Those skilled in the art will appreciate that the features described below can be combined in various ways to form multiple embodiments of the invention. As a result, the invention is not limited to the specific embodiments described below, but only by the claims and their equivalents.

Figure 1 is a block diagram illustrating a video multiplexing system. In Figure 1, video multiplexing system 100 comprises: analog video sources 101-104; video ADCs 111-114; video data streams 115-118; DSP 120; Random Access Memory (RAM) 130; video encoder 140; processing system 150; video bus 160; and, standard bus 161. DSP 120 includes video peripherals 121-125 and standard bus interface 126.

Standard bus 161 may be a Peripheral Component Interconnect (PCI) or other parallel-specified bus. Accordingly, standard bus interface 126 may be configured to comply with the standard specifying standard bus 161. In another example, standard bus 161 may be a Universal Serial Bus (USB) or other serial format specified bus.

DSP 120 may be a TMS320DM647 or TMS320DM648 digital media processor available from Texas Instruments^{™} that may be configured to receive multiple video data streams 115-118. Video encoder 140 may be an MG3500 available from Mobilygen^{™}. Processing system 150 may be a computer system based on the PowerPC™ microprocessor architecture available from International Business Machines (IBM).

Analog video source 101 is operatively coupled to video ADC 111. Video ADC 111 is operatively coupled to video peripheral 121. Analog video source 102 is operatively coupled to video ADC 112. Video ADC 112 is operatively coupled to video peripheral 122. Analog video source 103 is operatively coupled to video ADC 113. Video ADC 113 is operatively coupled to video peripheral 123. Analog video source 104 is operatively coupled to video ADC 114. Video ADC 114 is operatively coupled to video peripheral 124. Video peripherals 121-124 receive video data streams 115-118 from video ADCs 111-114, respectively.

Video peripheral 125 is operatively coupled to video encoder 140 via video bus 160. Standard bus interface 126 is operatively coupled to processing system 150 via standard bus 161. RAM 130 is operatively coupled to DSP 120. Thus, because video peripherals 121-125 and standard bus interface 126 are all part of DSP 120, video peripherals 121-125 and standard bus interface 126 are all operatively coupled to RAM 130, video encoder 140, and processing system 150.

Analog video sources 101-104 each produce an analog video signal. These analog video signals are converted to a digital format by video ADCs 111-114. The analog video signal produced by analog video source 101 is converted to a digital format by video ADC 111. The analog video signal produced by analog video source 102 is converted to a digital format by video ADC 112, and so on.

In an example, the digital format produced by ADCs 111-114 may be specified by the International Telecommunication Union Radiocommunication Sector (ITU-R) BT.656. A BT.656 digital video data stream is a sequence of 8-bit or 10-bit bytes, typically transmitted at a rate of 27 Mbyte/s. The BT.656 video data streams 115-118 produced by ADCs 111-114 are received by video peripherals 121-124, respectively. To receive video data streams 115-118, the interfaces of video peripherals 121-124 may be clocked at 27 MHz to match the BT.656 data rate.

DSP 120 processes and stores data from video data streams 115-118 in RAM 130. In an example, DSP 120 processes data from video data streams 115-118 by removing blanking data from video data streams 115-118 before storing in RAM 130. In another example, DSP 120 processes data from video data streams 115-118 by storing each video data stream 115-118 in a different area of RAM 130.

DSP 120 alternately transfers an unencoded frame each of video data streams 115-118 from RAM 130 to video peripheral 125. In other words, one unencoded frame of video data stream 115 is transferred from RAM 130 to video peripheral 125. Then, one unencoded frame of video data stream 116 is transferred from RAM 130 to video peripheral 125, and so on for frames of video streams 117 and 118. After a frame of video data stream 118 is transferred from RAM 130 to video peripheral 125, the process starts again by transferring the next frame of video data stream 116. In this manner, video peripheral 125 receives an unencoded multiplexed video data stream comprised of an alternating sequence of the frames from video data streams 115-118. In another embodiment, DSP 120 alternately transfers an unencoded field of each frame of video data streams 115-118 from RAM 130 to video peripheral 125.

In another embodiment, DSP 120 alternately transfers one or more unencoded lines of a frame each of video data streams 115-118 from RAM 130 to video peripheral 125. In other words, one or more unencoded lines of a frame of video data stream 115 is transferred from RAM 130 to video peripheral 125. Then, one or more unencoded lines of a frame of video data stream 116 is transferred from RAM 130 to video peripheral 125, and so on for lines of video data streams 117 and 118. After the line or lines of video data stream 118 is transferred from RAM 130 to video peripheral 125, the process starts again by transferring the next line or lines of video data stream 116. In this manner, video peripheral 125 receives an unencoded multiplexed video data stream comprised of an alternating sequence of lines from video data streams 115-118. In an embodiment, the line or lines of the video data streams each 115-118 comprise a field of an interlaced frame.

Video peripheral 125 transfers the unencoded multiplexed video data stream to video encoder 140 via video bus 160. In an example, video peripheral 125 transfers the unencoded multiplexed video data stream to video encoder 140 in BT.656 format at a rate of 108 Mbytes/s. To transfer the unencoded multiplexed video data stream at that rate, the interface of video peripheral 125 may be clocked at 108 MHz to match the data rate.

DSP 120 may also encode or otherwise process one or more of video data streams 115-118 while they are stored in RAM 130. DSP 120 may encode one or more of video data streams 115-118 and store the encoded version in RAM 130. For example, video data stream 115-118 may be encoded or compressed into a Moving Picture Experts Group (MPEG) specified format such as MPEG-4.

In another example, DSP 120 processes one or more of video data streams 115-118 to perform video analytics. Video Analytics is a technology that is used to analyze video for specific data, behavior, objects or attitude. Examples of video analytics applications include: counting the number of pedestrians entering a door or geographic region, determining the location, speed and direction of travel, identifying suspicious movement of people or assets, license plate identification, face recognition, or evaluating how long a package has been left in an area.

DSP 120 may transfer an encoded version of video data stream 115-118 to processing system 150 via standard bus interface 126 and standard bus 161. DSP 120 may also transfer other information, such as the results of video analytics, to processing system 150 standard bus interface 126 and standard bus 161.

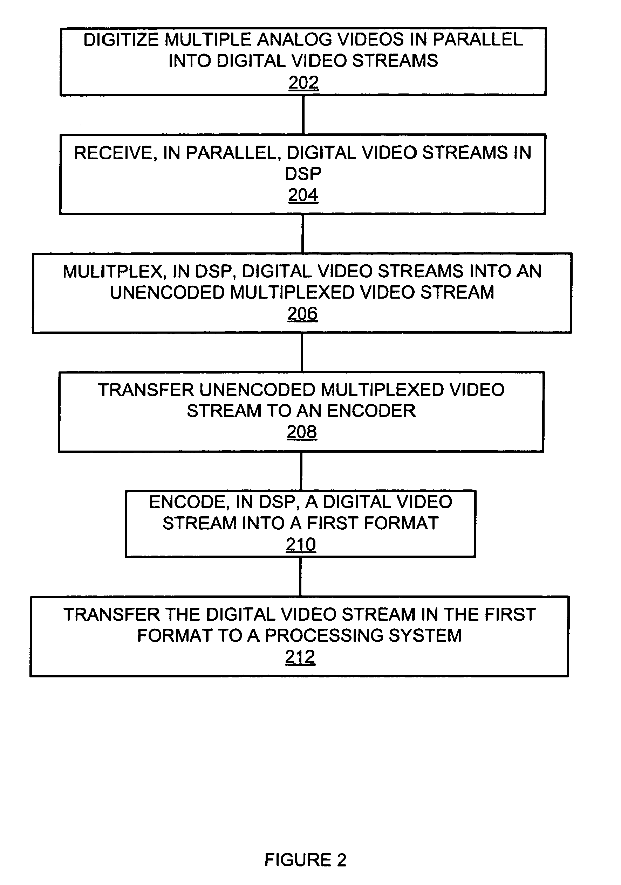

Figure 2 is a flowchart illustrating a method of multiplexing videos. The method of Figure 2 may be performed by video multiplexing system 100. Multiple analog videos are digitized in parallel into multiple digital video streams (202). These digital video streams are received in a DSP (204).

The multiple digital video streams received in the DSP are multiplexed in the DSP into an unencoded multiplexed video stream (206). For example, DSP 120 may alternately transfer an unencoded frame each of video data streams 115-118 from RAM 130 to video peripheral 125. In other words, one unencoded frame of video data stream 115 may be transferred from RAM 130 to video peripheral 125. Then, one unencoded frame of video data stream 116 may be transferred from RAM 130 to video peripheral 125, and so on for frames of video data streams 117 and 118. After a frame of video data stream 118 is transferred from RAM 130 to video peripheral 125, the process may start again by transferring the next frame of video data stream 116. In this manner, an unencoded multiplexed video data stream comprised of an alternating sequence of the frames from video data streams 115-118 is produced.

In another example, DSP 120 may alternately transfers one or more unencoded lines of a frame each of video data streams 115-118 from RAM 130 to video peripheral 125. In other words, one or more unencoded lines of a frame of video data stream 115 may be transferred from RAM 130 to video peripheral 125. Then, one or more unencoded lines of a frame of video data stream 116 may be transferred from RAM 130 to video peripheral 125, and so on for lines of video data streams 117 and 118. After the line or lines of video data stream 118 is transferred from RAM 130 to video peripheral 125, the process may start again by transferring the next line or lines of video data stream 116. In this manner, an unencoded multiplexed video data stream comprised of an alternating sequence of lines from video data streams 115-118 is produced.

The unencoded multiplexed video data stream is transferred to an encoder (208). For example, DSP 120 may transfer the unencoded multiplexed video data stream to video encoder 140 via video bus 160.

A digital video data stream is encoded into a first format in the DSP (210). For example, DSP 120 may encode one or more of video data streams 115-118 while they are stored in RAM 130. DSP 120 may encode one or more of video data streams 115-118 and store the encoded version in RAM 130. In an example, video data stream 115-118 may be encoded or compressed into a format such as MPEG-4.

The encoded digital video data stream may be transferred in the first format to a processing system (212). For example, DSP 120 may transfer an encoded version of video data stream 115-118 to processing system 150 via standard bus interface 126 and standard bus 161.

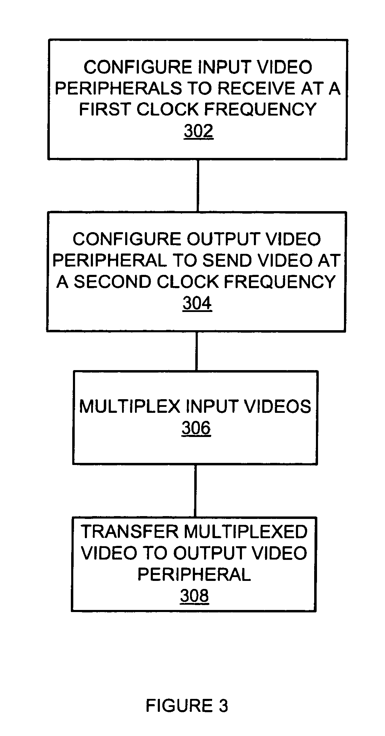

Figure 3 is a flowchart illustrating a method of receiving, transferring, and multiplexing videos. The method of Figure 3 may be performed by video multiplexing system 100. Multiple input video peripherals are configured to receive input videos at a first clock frequency. For example, video peripherals 121-124 may be configured to receive BT.656 formatted digital video at a clock rate of 27 MHz.

An output video peripheral is configured to send video at a second clock frequency (304). For example, video peripheral 125 may be configured to send video at a clock rate of 108 MHz.

The input videos are multiplexed (306). The multiplexed video is transferred to the output video peripheral (308). For example, DSP 120 may alternately transfer unencoded frames that correspond to each of video data streams 115-118 to video peripheral 125.

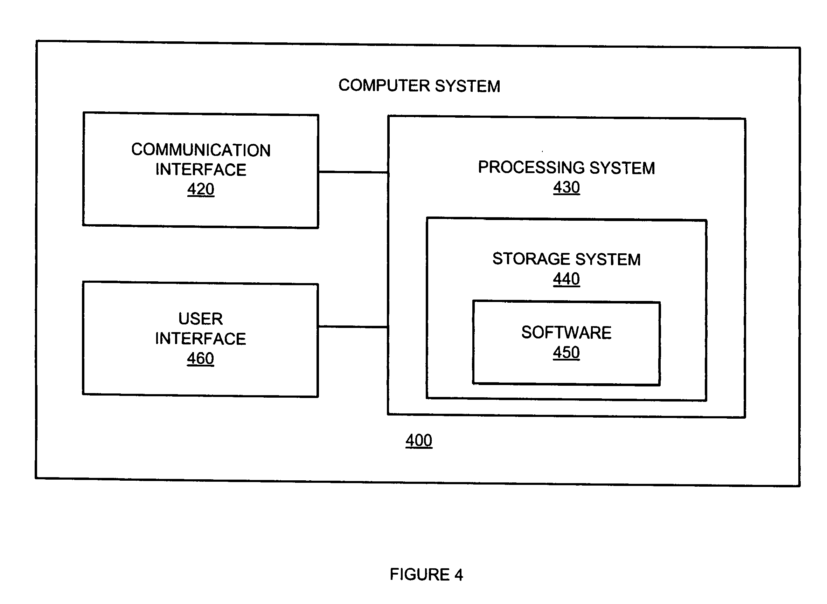

The methods, systems, devices, DSP, video peripherals, bus interfaces, interfaces, processing system, video encoder, ADCs, described above may be implemented with, contain, or be executed by one or more computer systems. The methods described above may also be stored on a computer readable medium. Many of the elements of video multiplexing system 100 may be, comprise, or include computers systems. This includes, but is not limited to: analog video sources 101-104; video ADCs 111-114; DSP 120; video encoder 140; processing system 150; DSP 120; and, video peripherals 121-125. These computer systems are illustrated, by way of example, in Figure 4.

Figure 4 illustrates a block diagram of a computer system. Computer system 400 includes communication interface 420, processing system 430, and user interface 460. Processing system 430 includes storage system 440. Storage system 440 stores software 450. Processing system 430 is linked to communication interface 420 and user interface 460. Computer system 400 could be comprised of a programmed general-purpose computer, although those skilled in the art will appreciate that programmable or special purpose circuitry and equipment may be used. Computer system 400 may be distributed among multiple devices that together comprise elements 420-460.

Communication interface 420 could comprise a network interface, modem, port, transceiver, or some other communication device. Communication interface 420 may be distributed among multiple communication devices. Processing system 430 could comprise a computer microprocessor, logic circuit, or some other processing device. Processing system 430 may be distributed among multiple processing devices. User interface 460 could comprise a keyboard, mouse, voice recognition interface, microphone and speakers, graphical display, touch screen, or some other type of user device. User interface 460 may be distributed among multiple user devices. Storage system 440 could comprise a disk, tape, integrated circuit, server, or some other memory device. Storage system 440 may be distributed among multiple memory devices.

Processing system 430 retrieves and executes software 450 from storage system 440. Software 450 may comprise an operating system, utilities, drivers, networking software, and other software typically loaded onto a computer system. Software 450 could comprise an application program, firmware, or some other form of machine-readable processing instructions. When executed by processing system 430, software 450 directs processing system 430 to operate as described herein.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

## Claims

1. A method of operating a video processing system, comprising:
receiving a plurality of video streams into a Digital Signal Processor (DSP) (120) produced by a plurality of Analog to Digital Converters (ADCs) (115);
the method **characterized by**:
multiplexing the plurality of video streams in the DSP into an unencoded multiplexed video stream; and
transferring the unencoded multiplexed video stream from the DSP to a video encoder (140).

2. The method of claim 1, further **characterized by**:
encoding at least one of the plurality of video streams into a first format in the DSP; and
transferring at least one video stream in the first format from the DSP to a processing system.

3. The method of claim 1, further **characterized by**:
clocking said plurality of video streams into said DSP at a first frequency; and
clocking said unencoded multiplexed video stream out of said DSP at a second frequency.

4. The method of claim 3, further **characterized by**:
encoding at least one of the plurality of video streams into a first format in the DSP; and
transferring at least one video stream in the first format from the DSP to a processing system.

5. The method of claim 3, wherein said second frequency is a multiple of said first frequency and said multiple corresponds to the number of video streams in said plurality of video streams.

6. The method of claim 5, wherein said unencoded multiplexed video stream comprises a sequence of video fields from each of said plurality of video streams.

7. The method of claim 5, wherein said unencoded multiplexed video stream comprises a sequence of video lines from each of said plurality of video streams.

8. The method of claim 1, wherein said unencoded multiplexed video stream comprises a sequence of video fields from each of said plurality of video streams.

9. The method of claim 1, wherein said unencoded multiplexed video stream comprises a sequence of video lines from each of said plurality of video streams.

10. A video processing system, comprising:
a plurality of video Analog to Digital Converters (ADCs) (115) converting a plurality of analog video signals into a plurality of digital video streams; and the video processing system further **characterized by**:
a Digital Signal Processor (DSP) (120) that receives said plurality of digital video streams and generates a multiplexed video stream from said plurality of digital video streams;
wherein said DSP communicates the multiplexed video stream to a video encoder (140) in an unencoded format.

11. The video processing system of claim 10, wherein the DSP encodes at least one of said plurality of digital video streams into an encoded format and transfers the at least one of the plurality of digital video streams in an encoded format to a processing system.

12. The video processing system of claim 10, wherein a first interface of said DSP that receives at least one of said plurality of video streams is clocked at a first frequency and a second interface of said DSP communicating the multiplexed video stream is clocked at a second frequency.

13. The video processing system of claim 12, wherein the DSP encodes at least one of said plurality of digital video streams into an encoded format and transfers the at least one of the plurality of digital video streams in an encoded format to a processing system.

14. The video processing system of claim 12, wherein said second frequency is a multiple of said first frequency and said multiple corresponds to the amount of data per second in said plurality of video streams.

15. The video processing system of claim 10 wherein said multiplexed video stream comprises a sequence of video fields from each of said plurality of video streams.
